# EUROPEAN PATENT SPECIFICATION

(11) **EP 4 035 955 B1**
(45) Date of publication and mention of the grant of the patent: **06.05.2026**
(21) Application number: 22153491.0
(22) Date of filing: 26.01.2022
(51) Int. Cl.: B60R 21/231, B60R 21/233, B60R 21/2346

(54) **AIRBAG CUSHION**
AIRBAG-KISSEN
COUSSIN D'AIRBAG

(30) Priority: 02.02.2021 JP 2021015349
(43) Date of publication of application: 03.08.2022
(73) Proprietor: Autoliv Development AB, 447 83 Vårgårda (SE)
(72) Inventor: ASADA, Teruyuki, Ibaraki, 305-0031 (JP); KIM, Byunghoon, Ibaraki, 305-0031 (JP)
(74) Representative: Müller Verweyen

(56) References cited:
- WO-A1-2019/031110
- JP-A- 2005 082 068
- US-A1- 2015 014 970
- US-A1- 2015 035 262
- US-A1- 2016 304 047

## Description

### TECHNICAL FIELD

The present invention relates to an airbag cushion and a side airbag device equipped in a vehicle seat.

### BACKGROUND TECHNOLOGY

In order to protect occupants in the event of a vehicle collision, it is well known that vehicles are equipped with one or a plurality of airbags. These airbags include, for example, various forms such as: a so-called driver airbag which expands from near the center of the steering wheel of an automobile so as to protect a driver; a curtain airbag which deploys downward along an inner side of a window of an automobile so as to protect occupants during collisions in a lateral direction of the vehicle, as well as when overturning and during rollover accidents; and a side airbag stored in a side port of a seat which is deployed between the occupant and a side panel so as to protect the occupant upon impact in the lateral direction of the vehicle. The present invention relates to a side airbag device.

In side airbag devices, it is important to stabilize the deployment behavior and deployment shape of an airbag cushion. If the deployed airbag cushion does not take the assumed normal shape, the occupant restraining performance is reduced. Furthermore, if the airbag cushion does not promptly deploy, restraint of an occupant is delayed. From the document US 2016/304047 A1 it is known an airbag cushion comprising all features of the preamble of claim 1.

### SUMMARY OF THE INVENTION

### PROBLEM TO BE SOLVED BY THE INVENTION

In view of the foregoing, an object of the present invention is to provide an airbag cushion that contributes to stabilizing the deployment behavior and deployment shape of a side airbag device.

### MEANS FOR SOLVING THE PROBLEMS

In order to achieve the aforementioned object, the present invention is an airbag cushion that is defined by the features of claim 1. Furthermore the present invention is a side airbag device housed in a vehicle seat, comprising an airbag cushion according to claim 1 that restrains an occupant by expanding and deploying; and an inflator that supplies expansion gas to the airbag cushion.

In the side airbag device according to the present invention with the configuration described above, when the device is activated due to a vehicle collision and expansion gas is supplied from the inflator, the expansion gas flows from the inflator housing region into the skeletal region. The skeletal region deploys prior to the main chamber and deploys in a rod shape. Therefore, the rigidity of the rapidly deploying skeletal region is high, which stabilizes the deployment posture and deployment shape of the airbag cushion overall. Furthermore, a core is formed in a portion of the airbag cushion; therefore, the airbag cushion is not easily deformed when an occupant advances into the deployed airbag.

A length in a front-rear direction and a length in a left-right width direction can be essentially the same, when the skeletal region in the deployed state is viewed in a cross section perpendicular to a longitudinal direction of the region. For example, the cross section can be circular. This shape allows the expansion gas to flow smoothly through the skeletal region and the skeletal region to rapidly expand.

Herein, "essentially the same" does not mean completely the same, and allows for an error (width) to the extent that the expansion gas flows smoothly within the skeletal region. For example, when a first length is α and a second length is β, α can be within a range of 0.5 to 1.5 times that of β.

The skeletal region can be molded to generally extend in a linear manner in the longitudinal direction. By extending the skeletal region in a linear rod shape, there are no bent portions inside the skeletal region, which accelerates the development of the skeletal region.

The inflator housing region can be configured to fit inside a side support part of the vehicle seat when the deployed airbag cushion is viewed from a side of a vehicle.

For example, the configuration can be such that, when the airbag cushion in the deployed state is viewed from a side of the vehicle, the upper rear end side (100b) extends between an uppermost point (HP) of the airbag cushion and an upper end of the rear end side (100a), the lower front end side (100d) extends between a lowermost point (LP) and frontmost point (FP) of the airbag cushion, and the upper front end side (100c) extends between the uppermost point (HP) and the frontmost point (FP).

Furthermore, a second vent hole that discharges expansion gas into the main chamber can be formed in the inflator housing region. When deploying the main chamber, expansion gas is supplied not only from the skeletal region but also from the inflator housing region, thereby increasing the expansion rate of the main chamber.

In this case, the skeletal region is positioned behind the occupant (shoulders and torso), such that the occupant moving in a lateral direction can be quickly restrained.

According to the invention, the skeletal region is configured to include a second region extending from a lower portion of the inflator housing region along the lower front end side (100d), and the main chamber is positioned behind the second region.

In this case, the skeletal region extends greatly forward from the side support part of the vehicle seat.

The skeletal region can be configured to include a first region extending from an upper portion of the inflator housing region along the upper rear end side (100b) and, according to the invention, a second region extending from a lower portion of the inflator housing region along the lower front end side (100d), and the main chamber is positioned between the first region and second region.

In this case, the skeletal region extends from a lower portion to a wide range above and in front of the airbag cushion, allowing the airbag cushion to be spread significantly at an early stage and the maximum restraining area to be quickly secured.

The skeletal region can be configured to include a third region extending from the inflator housing region to a center position of the upper front end side (100c), and the main chamber is positioned in front of and behind the skeletal region.

In this case, the skeletal region extends upward or diagonally upward from a periphery of the inflator through a periphery of the center of the airbag cushion.

A baffle plate that regulates the thickness in a vehicle width direction can be provided inside the main chamber.

The baffle plate can be configured to extend substantially parallel to the skeletal region, when the deployed airbag cushion is viewed from the vehicle width direction.

In the specification and claims of the present application, the direction in which the occupant is facing (the direction of vehicle travel) when the occupant is seated in the seat in a normal posture is referred to as "forward" and the opposite direction is referred to as "rear", and the axis of the coordinates are referred to as the "front-rear direction". Moreover, when the occupant is seated in the seat in a regular posture, the right of the occupant is referred to as the "right direction," the left of the occupant is referred to as the "left direction," and the direction indicating the coordinate axis is referred to as the "left and right direction." In the left-right direction, a region on an occupant side from a side frame of the seat shall be referred to as "inside", and a region opposite from the occupant as viewed from the side frame shall be referred to as "outside". Similarly, when the occupant is seated in the seat in a regular posture, the head direction of the occupant is referred to as "up," the waist direction of the occupant is referred to as "down," and the direction indicating the coordinate axis is referred to as the "vertical direction."

The side airbag apparatus according to the present invention includes a type which is deployed on the door side of (outside) the seat, along with a type which is deployed on the vehicle center side of the seat. A side airbag device of a type which is deployed on the vehicle center side of the seat, for example, is referred to as a far side airbag, front center airbag, rear center airbag, and the like.

### BRIEF DESCRIPTION OF THE DRAWINGS

FIG. 1

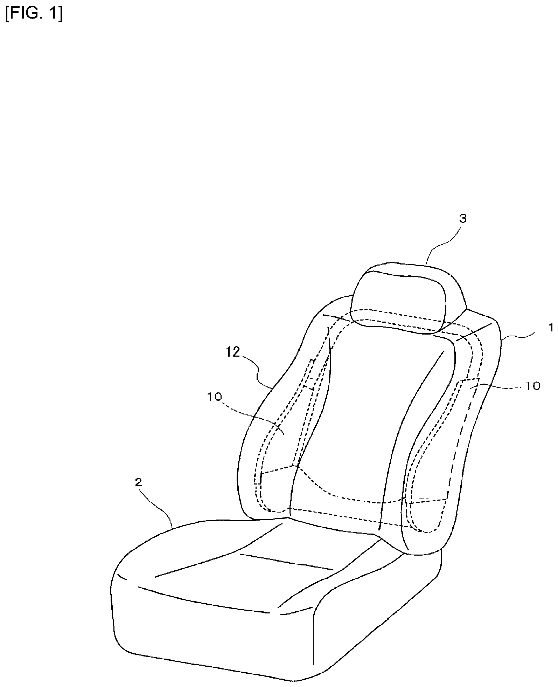

   FIG. 1 is a perspective view primarily illustrating an external shape of a vehicle seat, with an illustration of a side airbag device omitted.
FIG. 2

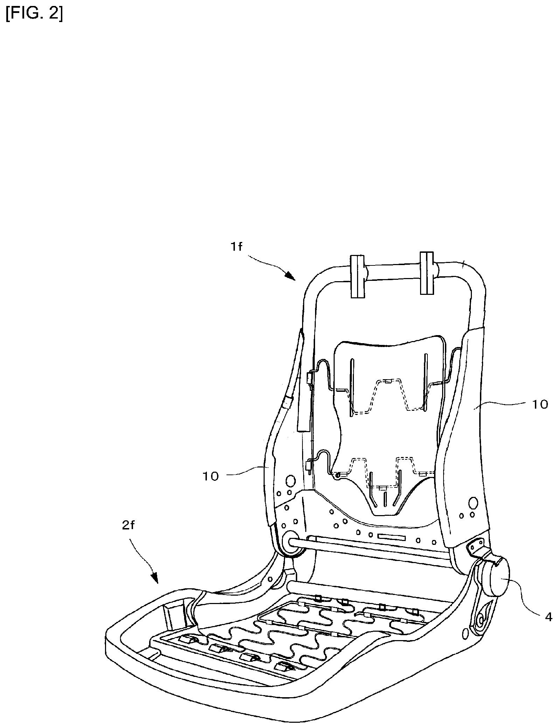

   FIG. 2 is a perspective view illustrating an internal structure (seat frame) functioning as a framework of the vehicle seat illustrated in FIG. 1, with an illustration of the side airbag device omitted.
FIG. 3

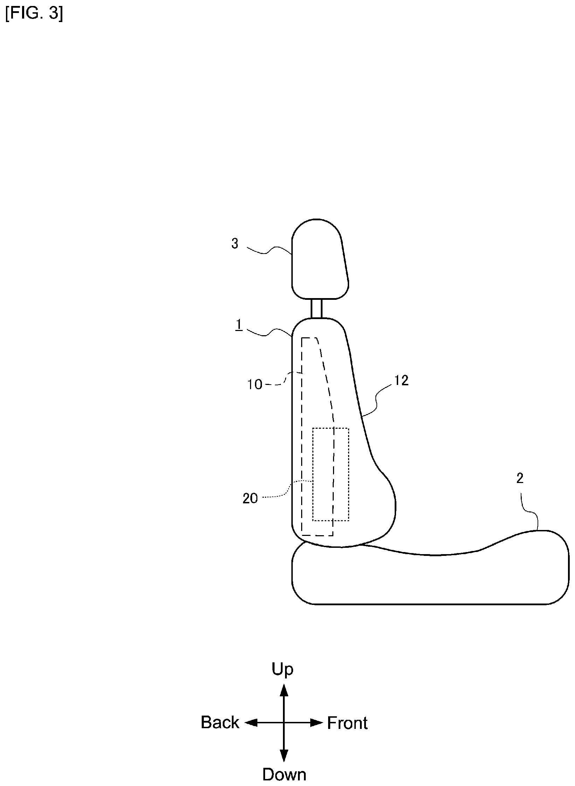

   FIG. 3 is a schematic side surface view of the vehicle seat according to the present invention, schematically illustrating a condition where the side airbag device is stored therein, observed from the outside in the vehicle width direction.
FIG. 4

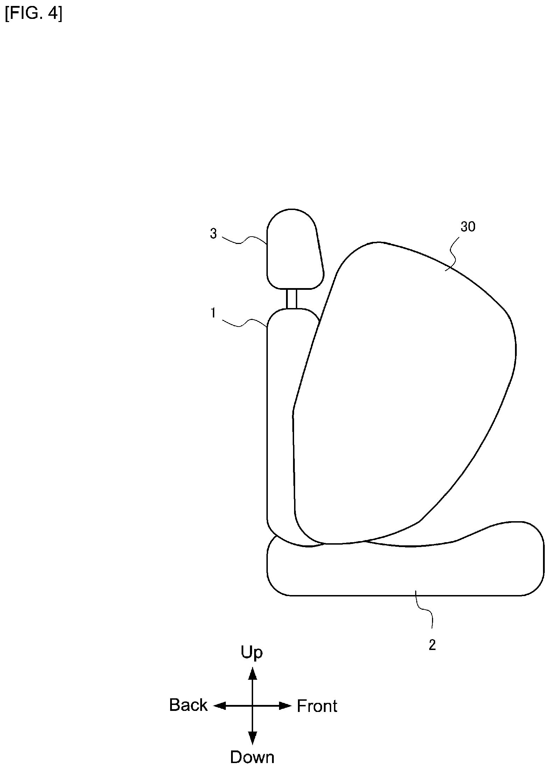

   FIG. 4 is a schematic side view of the vehicle seat, illustrating a condition where the airbag cushion is deployed as observed from the outer side in the vehicle width direction.
FIG. 5

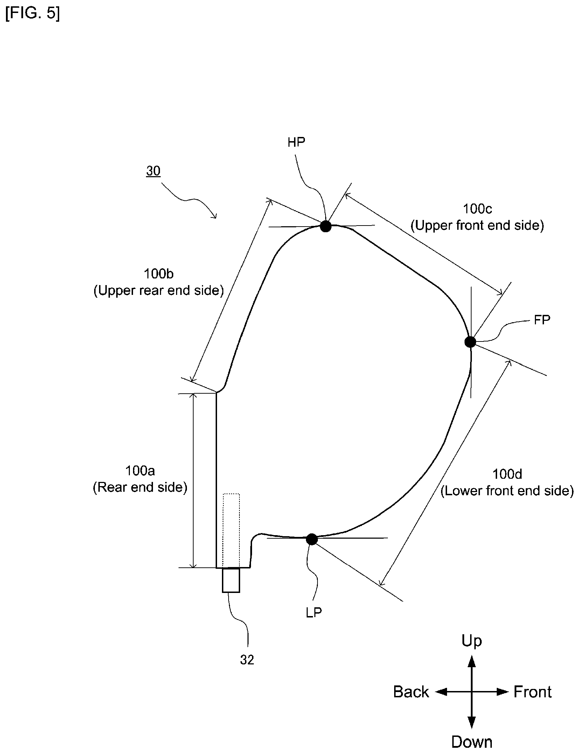

   FIG. 5 is an explanatory diagram for regulating each site of the deployed airbag cushion, which can also be applied to any of the embodiments.
FIG. 6

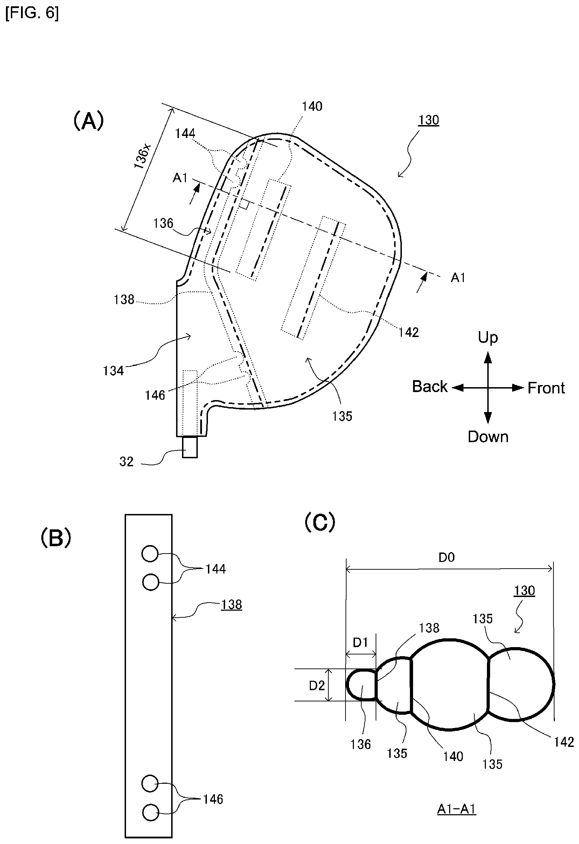

   FIG. 6 illustrates a configuration of a side airbag device, not according to the present invention, where (A) is a side view of a deployed airbag cushion, (B) is a plan view of a partition panel disposed inside the airbag cushion to form a skeletal region, and (C) is a schematic cross-sectional view along direction A1-A1 in (A).
FIG. 7

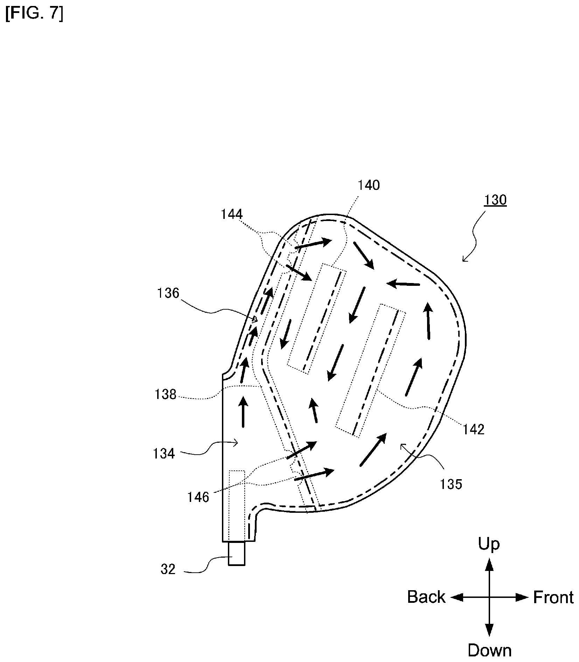

   FIG. 7 illustrates the flow of gas inside the airbag cushion in the side airbag device according to one example, not according to the invention.
FIG. 8

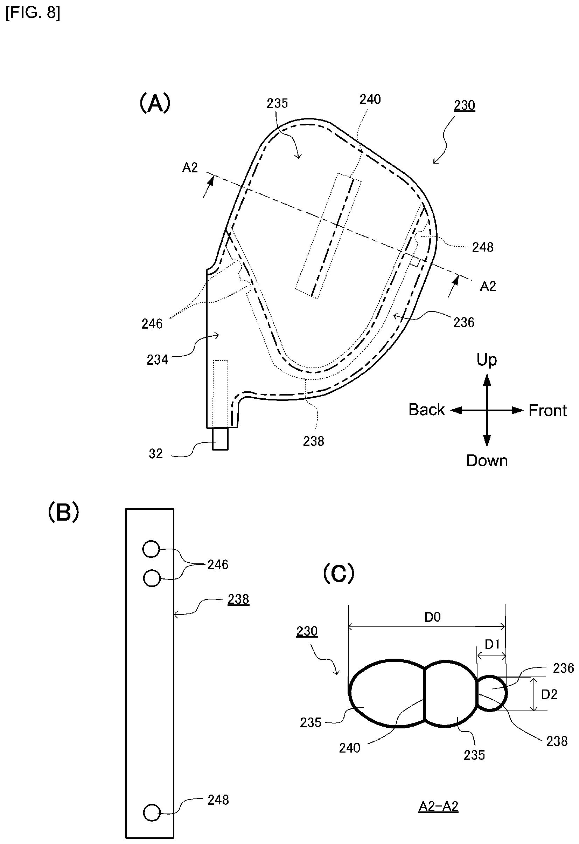

   FIG. 8 illustrates a configuration of a side airbag device according to Embodiment 2 of the present invention, where (A) is a side view of a deployed airbag cushion, (B) is a plan view of a partition panel disposed inside the airbag cushion to form a skeletal region, and (C) is a schematic cross-sectional view along direction A2-A2 in (A).
FIG. 9

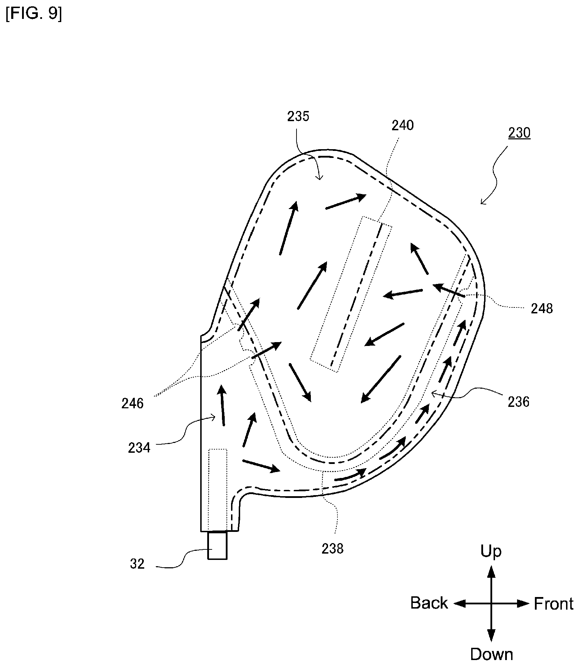

   FIG. 9 illustrates the flow of gas inside the airbag cushion in the side airbag device according to Embodiment 2.
FIG. 10

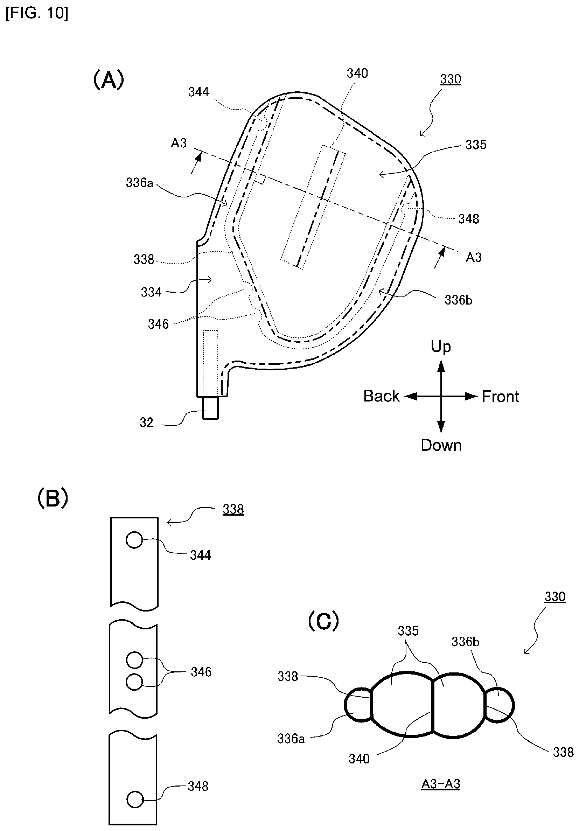

   FIG. 10 illustrates a configuration of a side airbag device according to Embodiment 3 of the present invention, where (A) is a side view of a deployed airbag cushion, (B) is a plan view of a partition panel disposed inside the airbag cushion to form a skeletal region, and (C) is a schematic cross-sectional view along direction A3-A3 in (A).
FIG. 11

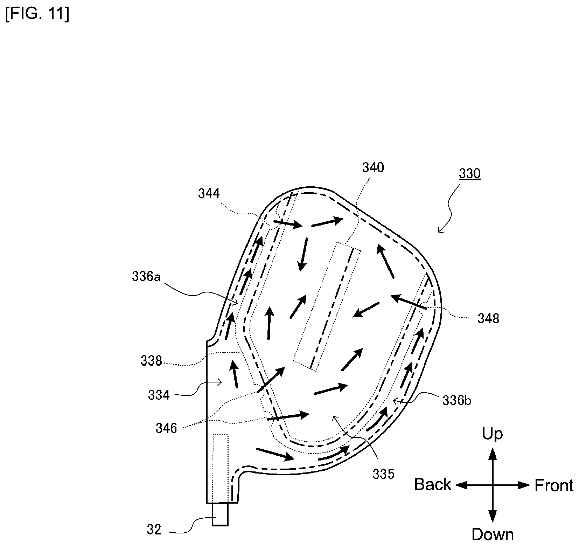

   FIG. 11 illustrates the flow of gas inside the airbag cushion in the side airbag device according to Embodiment 3.
FIG. 12

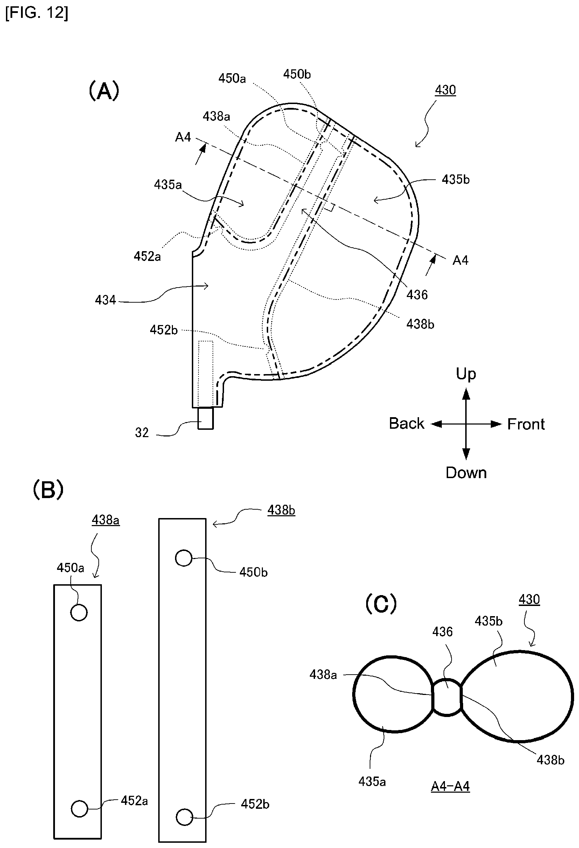

   FIG. 12 illustrates a configuration of a side airbag device according to an example, not according to the present invention, where (A) is a side view of a deployed airbag cushion, (B) is a plan view of a partition panel disposed inside the airbag cushion to form a skeletal region, and (C) is a schematic cross-sectional view along direction A4-A4 in (A).
FIG. 13

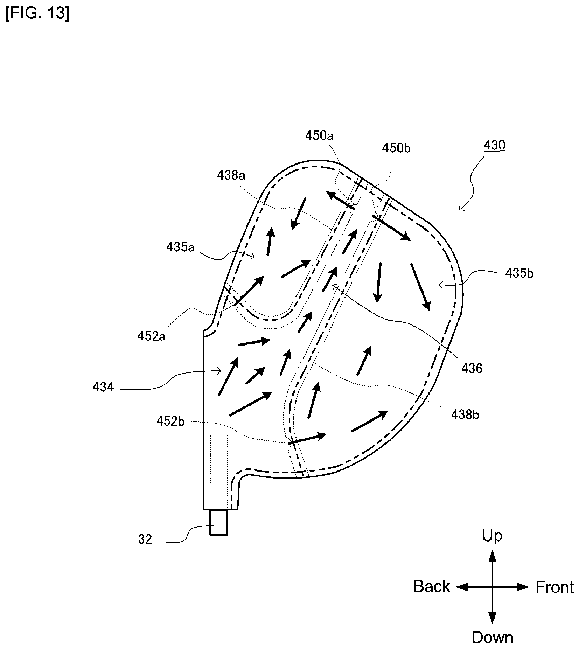

   FIG. 13 illustrates the flow of gas inside the airbag cushion in the side airbag device according to **the** example in Fig. 12.
FIG. 14

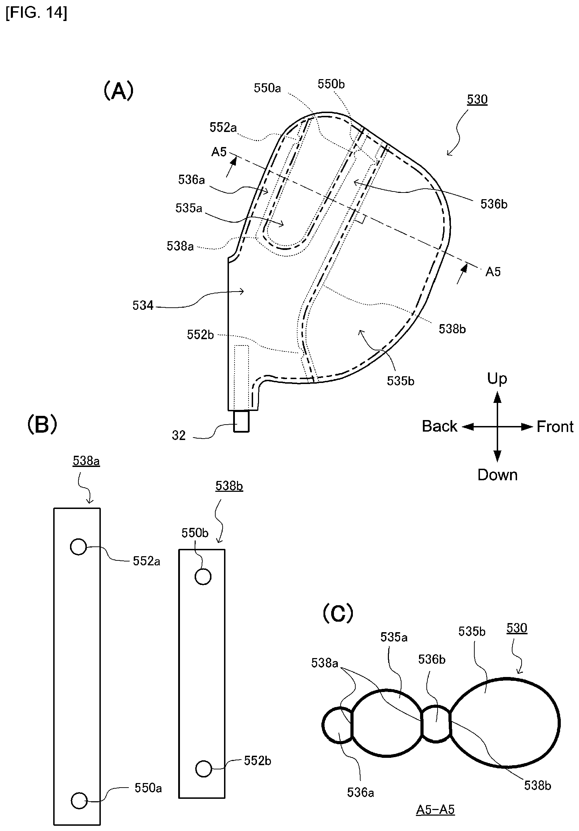

   FIG. 14 illustrates a configuration of a side airbag device according to an example, not according to the present invention, where (A) is a side view of a deployed airbag cushion, (B) is a plan view of a partition panel disposed inside the airbag cushion to form a skeletal region, and (C) is a schematic cross-sectional view along direction A5-A5 in (A).
FIG. 15

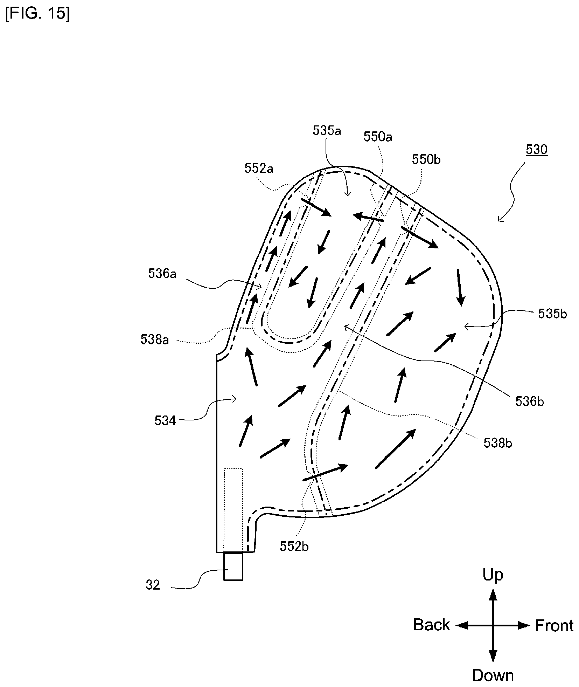

   FIG. 15 illustrates the flow of gas inside the airbag cushion in the side airbag device according to the example in Fig. 14.
FIG. 16

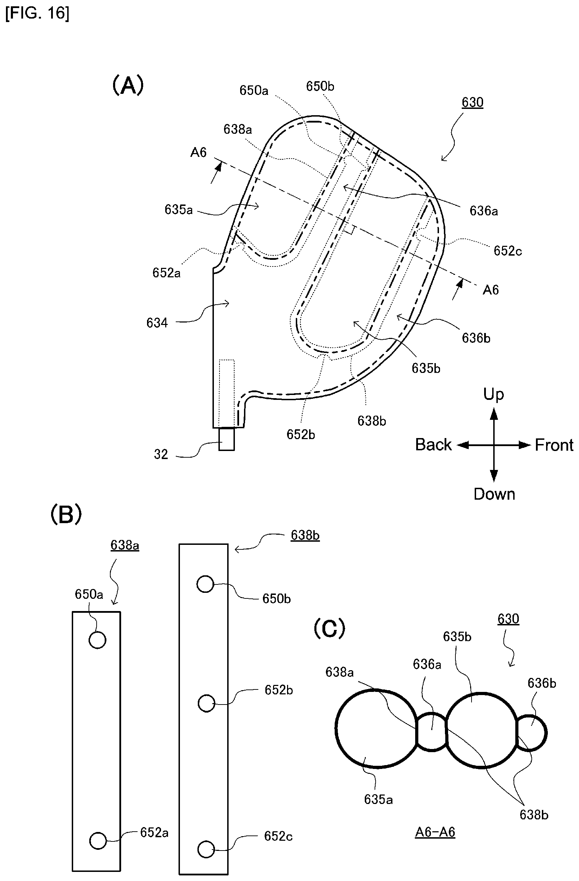

   FIG. 16 illustrates a configuration of a side airbag device according to Embodiment 6 of the present invention, where (A) is a side view of a deployed airbag cushion, (B) is a plan view of a partition panel disposed inside the airbag cushion to form a skeletal region, and (C) is a schematic cross-sectional view along direction A6-A6 in (A).
FIG. 17

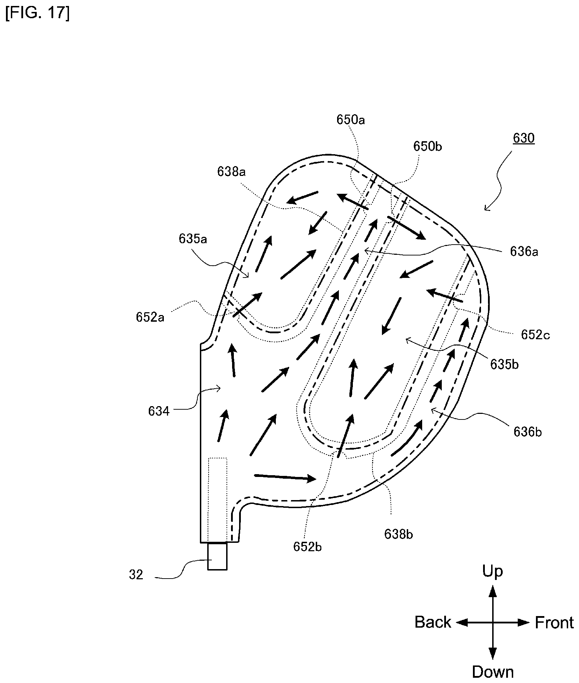

   FIG. 17 illustrates the flow of gas inside the airbag cushion in the side airbag device according to Embodiment 6.
FIG. 18

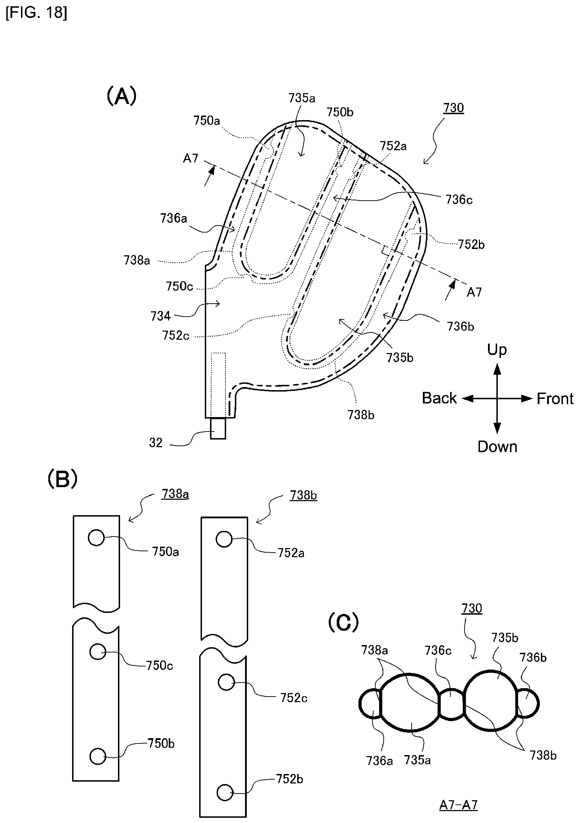

   FIG. 18 illustrates a configuration of a side airbag device according to Embodiment 7 of the present invention, where (A) is a side view of a deployed airbag cushion, (B) is a plan view of a partition panel disposed inside the airbag cushion to form a skeletal region, and (C) is a schematic cross-sectional view along direction A7-A7 in (A).
FIG. 19

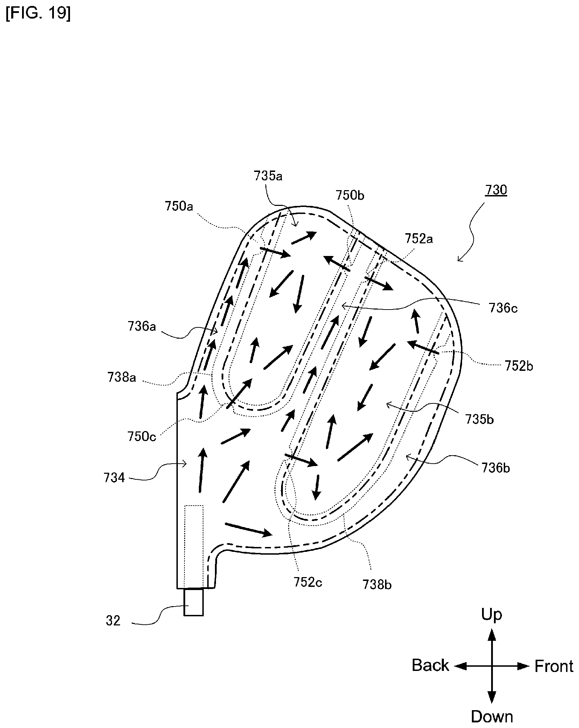

   FIG. 19 illustrates the flow of gas inside the airbag cushion in the side airbag device according to Embodiment 7.

### MODE FOR CARRYING OUT THE INVENTION

Aside airbag device according to embodiments of the present invention will be described below with reference to the accompanying drawings.

FIG. 1 is a perspective view primarily illustrating an external shape of a vehicle seat, with an illustration of an airbag device (airbag module) 20 omitted. FIG. 2 is a perspective view illustrating an internal structure (seat frame) functioning as a framework of the vehicle seat illustrated in FIG. 1, with an illustration of the airbag device (airbag module) 20 omitted herein as well. FIG. 3 is a schematic side surface view of the vehicle seat, illustrating a condition where the airbag device (airbag module) 20 is stowed on a side surface (near side) near a left side seat door as observed from the outside in the vehicle width direction. FIG. 4 is a schematic side view of the vehicle seat, illustrating a condition where the airbag cushion is deployed as observed from the outer side in the vehicle width direction.

As illustrated in FIG. 1 and FIG. 2, the vehicle seat, when viewed as a part, is composed of a seat cushion 2 of a portion in which an occupant is seated; a seat back 1 forming a backrest; and a headrest 3 connected to the upper end of the seat back 1.

As illustrated in FIG. 2, a seat back frame 1f forming a skeleton of the seat is provided inside the seat back 1, a pad (not shown) made of a urethane foam material or the like is provided on a surface and periphery thereof, and a surface of the pad is covered with a skin such as leather, fabric, or the like. A seating frame 2f is provided on a bottom side of the seat cushion 2. Similar to the seat back 1, a pad made of a urethane foam material or the like is provided on an upper surface and periphery thereof, and a surface of the pad is covered by the skin such as leather, fabric, or the like. The seating frame 2f and the seat back frame 1f are connected via a reclining mechanism 4.

As illustrated in FIG. 2, the seat back frame 1f is configured into a frame shape by side frames 10 disposed laterally spaced apart and extending in the vertical direction, an upper frame connecting the upper ends of the side frames 10, and a lower frame connecting the lower ends thereof. The headrest 3 is configured by providing a cushioned component outside a headrest frame.

As illustrated in FIG. 3, the side airbag device 20 is secured to the side frame. Furthermore, as illustrated in FIG. 4, when the side airbag device 20 is activated, an airbag cushion 30 deploys toward the front.

FIG. 5 is an explanatory diagram for regulating each site of the deployed airbag cushion 30 (130, 230, 330, 430, 530, 630, 730), which can also be commonly applied to all of the embodiments described below.

As illustrated in FIG. 5, the airbag cushion 30 can be demarcated into a rear end side 100a extending in an up-down direction on a lower portion at the rear of the vehicle, an upper rear end side 100b extending diagonally upward and forward from an upper end of the rear end side 100a, a lower front end side 100d extending diagonally upward and forward from the lower portion of the rear end side 100a, and an upper front end side 100c extending between the upper rear end side 100b and the lower front end side 100d.

For example, when the airbag cushion 30 in the deployed state viewed from a side of the vehicle, expression is feasible where the upper rear end side 100b extends between an uppermost point HP of the airbag cushion and an upper end of the rear end side 100a, the lower front end side 100d extends between a lowermost point LP and frontmost point FP of the airbag cushion, and the upper front end side 100c extends between the uppermost point HP and the frontmost point FP.

FIG. 6 illustrates a configuration of a side airbag device according to one example, not according to the present invention, where (A) is a side view of a deployed airbag cushion 130, (B) is a plan view of a partition panel 138 disposed inside the airbag cushion 130 to form a skeletal region 136, and (C) is a schematic cross-sectional view along direction A1-A1 in (A).

The side airbag device includes an airbag cushion 130 that restrains an occupant when expanded and deployed; and an inflator 32 that supplies expansion gas to the airbag cushion 130. The airbag cushion 130 includes: an inflator housing region 134 that houses the inflator 32; a main chamber region 135 that primarily contributes to restraining an occupant; and a skeletal region 136 that is connected to the inflator housing region 134 and deploys in a rod shape prior to the main chamber 135.

As illustrated in FIG. 5 and FIG. 6(A), the airbag cushion 130 can be molded into a bag shape by folding one panel over along the rear end side 100a and stitching together the other sides 100b, 100c, 100d. Note that the airbag cushion 130 can also be molded into a bag shape by overlaying two panels having the same shape and stitching them together around the entire circumference.

As illustrated in FIG. 6(A), the skeletal region 136 is configured to extend from an upper portion of the inflator housing region 134 along the upper rear end side (100b) such that the main chamber 135 is positioned in front of the skeletal region 136.

As illustrated in FIG. 6(A) and FIG. 6(B), the skeletal region 136 is molded by stitching an edge portion in a longitudinal direction of one strip-shaped partition panel 138 with regard an inner surface of the airbag cushion 130. The partition panel 138 demarcates the skeletal region 136 and also forms the inflator housing region 134. In other words, the inflator housing region 134, which is substantially triangular in a side view, is demarcated by the rear end side (100a), the lower portion of the lower front end side (100d), the lower portion of the upper rear end side (100b), and the partition panel 138.

As illustrated in FIG. 6(A), when viewed as a whole, the partition panel 138 is configured such that an intermediate position is bent but extends in a linear manner in the longitudinal direction in a skeletal region 136 range (136x). When the skeletal region 136 linearly extends in a rod shape, there are no bent portions, and the expansion gas flows smoothly inside the skeletal region 136, resulting in a faster expansion rate.

As illustrated in FIG. 6(A) and FIG. 6(B), two vent holes 144, 146 are formed at each of two end portions of the partition panel 138. The vent holes 144 connect the skeletal region 136 and the main chamber 135. On the other hand, the vent hole 146 connects the inflator housing region 134 and the main chamber 135.

As illustrated in FIG. 6(A) and FIG. 6(C), baffle plates 140, 142 that regulate the thickness in the vehicle width direction are provided inside the main chamber 135. The baffle plates 140, 142 are arranged and configured so as to extend essentially in parallel with the longitudinal direction of the skeletal region 136. Note that the partition panel 138 and baffle plates 140, 142 can be molded from the same material fabric as the main body portion of the airbag cushion 130.

As illustrated in FIG. 6(C), when viewed in a cross-section perpendicular to the longitudinal direction, the skeletal region 136 is preferably set such that a length D1 in the front-rear direction and a length D2 in the left-right width direction are essentially the same. For example, the cross section can be circular. This shape allows the expansion gas to flow smoothly through the skeletal region 136 and the skeletal region 136 to rapidly expand.

Herein, "essentially the same" does not only mean completely the same, and allows for error (width) to the extent that the expansion gas flows smoothly within the skeletal region 136. For example, when a first length is α and a second length is β, α can be within a range of 0.5 to 1.5 times that of β.

As illustrated in FIG. 6(C), the cross-sectional area of the skeletal region 136 is sufficiently small as compared to the main chamber 135. For example, D1 and D2 can be approximately 1/10 to 1/5 of an overall width D0 of the airbag cushion 130.

FIG. 7 is an explanatory diagram illustrating the flow of gas inside the airbag cushion 130. When the airbag device is activated and expansion gas is discharged from the inflator 32, expansion gas flows from the inflator housing region 134 to the skeletal region 136. The expansion gas also flows from the inflator housing region 134 to the main chamber 135 through the vent holes 146 in the partition panel 138.

Thereafter, gas flows from the skeletal region 136 through the vent holes 144 in the partition panel 138 into the main chamber 135, such that the airbag cushion 130 fully deploys.

In the present example, the skeletal region 136 precedes the main chamber 135 and deploys into a rod shape. The internal pressure in the skeletal region 136, which has a small cross-sectional area, is relatively high, and the rigidity of the skeletal region 136 increases, forming a core on an entire rear portion of the airbag cushion 130. As a result, the skeletal region 136 positioned behind (shoulder and torso) of the occupant can quickly restrain the occupant moving in the lateral direction and stabilize the deployment posture and deployment shape of the entire airbag cushion 130. Furthermore, when the occupant advances into the deployed airbag cushion 130, the airbag cushion 130 is not easily deformed, and thus the occupant can be reliably restrained.

### Embodiment 2

FIG. 8 illustrates a configuration of a side airbag device according to Embodiment 2 of the present invention, where (A) is a side view of a deployed airbag cushion 230, (B) is a plan view of a partition panel 238 disposed inside the airbag cushion 230 to form a skeletal region 236, and (C) is a schematic cross-sectional view along direction A2-A2 in (A).

The side airbag device according to the present embodiment includes: an airbag cushion 230 that restrains an occupant when expanded and deployed; and an inflator 32 that supplies expansion gas to the airbag cushion 230. The airbag cushion 230 includes: an inflator housing region 234 that houses the inflator 32; a main chamber region 235 that primarily contributes to restraining an occupant; and a skeletal region 236 that is connected to the inflator housing region 234 and deploys in a rod shape prior to the main chamber 235.

As illustrated in FIG. 5 and FIG. 8(A), the airbag cushion 230 can be molded into a bag shape by folding one panel over along the rear end side 100a and stitching together the other sides 100b, 100c, 100d. Note that the airbag cushion 230 can also be molded into a bag shape by overlaying two panels having the same shape and stitching them together around the entire circumference.

As illustrated in FIG. 8(A), the skeletal region 236 is configured to extend from a lower portion of the inflator housing region 234 to the lower front end side (100d) such that the main chamber 235 is positioned behind the skeletal region 236.

As illustrated in FIG. 8(A) and FIG. 8(B), the inflator housing region 234 and skeletal region 236 are molded by stitching an edge portion in a longitudinal direction of one strip-shaped partition panel 238 with regard to an inner surface of the airbag cushion 230. The inflator housing region 234, which is substantially triangular in side view, is demarcated by the rear end side (100a), the lower portion of the lower front end side (100d), the lower portion of the upper rear end side (100b), and the partition panel 238.

As illustrated in FIG. 8(A), although partially curved, the partition panel 238 is configured so as to generally extend in a linear manner in the longitudinal direction at a portion corresponding to the skeletal region 236. When the skeletal region 236 linearly extends in a rod shape, the expansion gas flows smoothly inside the skeletal region 236, resulting in a faster expansion rate.

As illustrated in FIG. 8(A) and FIG. (B), two vent holes 246 are formed on a first end of the partition panel 238, and one vent hole 248 is formed on a second end. The vent hole 248 connects the skeletal region 136 [sic] and the main chamber 235. On the other hand, the vent hole 246 connects the inflator housing region 234 and the main chamber 235.

As illustrated in FIG. 8(A) and FIG. 8(C), a baffle plate 240 that regulates the thickness in the vehicle width direction is provided inside the main chamber 235. The baffle plate 240 is arranged and configured so as to extend essentially in parallel with the longitudinal direction of the skeletal region 236. Note that the partition panel 238 and baffle plate 240 can be molded from the same material fabric as the main body portion of the airbag cushion 230.

As illustrated in FIG. 8(C), when viewed in a cross-section perpendicular to the longitudinal direction, the skeletal region 236 is preferably set such that a length D1 in the front-rear direction and a length D2 in the left-right width direction are essentially the same. For example, the cross section can be circular. This shape allows the expansion gas to flow smoothly through the skeletal region 236 and the skeletal region 236 to rapidly expand.

Herein, "essentially the same" does not only mean completely the same, and allows for error (width) to the extent that the expansion gas flows smoothly within the skeletal region 136. For example, when a first length is α and a second length is β, α can be within a range of 0.5 to 1.5 times that of β.

As illustrated in FIG. 8(C), the cross-sectional area of the skeletal region 236 is sufficiently small as compared to the main chamber 235. For example, D1 and D2 can be approximately 1/10 to 1/5 of an overall width D0 of the airbag cushion 230.

FIG. 9 is an explanatory diagram illustrating the flow of gas inside the airbag cushion 230. When the airbag device is activated and expansion gas is discharged from the inflator 32, expansion gas flows from the inflator housing region 234 to the skeletal region 236. The expansion gas also flows from the inflator housing region 234 through the vent hole 246 in the partition panel 238 to the main chamber 235.

Thereafter, gas flows from the skeletal region 236 through the vent holes 248 in the partition panel 238 into the main chamber 235, such that the airbag cushion 230 fully deploys.

In the present embodiment, the skeletal region 236 precedes the main chamber 235 and deploys into a rod shape. The internal pressure in the skeletal region 236, which has a small cross-sectional area, is relatively high, and the rigidity of the skeletal region 236 increases, forming a core on an entire front portion of the airbag cushion 230. Furthermore, the skeletal region 236 extends greatly forward from the side support part of the vehicle seat. As a result, the deployment posture and deployment shape of the entire airbag cushion 230 is stabilized. Furthermore, when the occupant advances into the deployed airbag cushion 230, the airbag cushion 230 is not easily deformed, and thus the occupant can be reliably restrained.

### Embodiment 3

FIG. 10 illustrates a configuration of a side airbag device according to Embodiment 3 of the present invention, where (A) is a side view of a deployed airbag cushion 330, (B) is a plan view of a partition panel disposed inside the airbag cushion 330 to form a skeletal region, and (C) is a schematic cross-sectional view along direction A3-A3 in (A). FIG. 11 illustrates the flow of gas inside the airbag cushion in the side airbag device 330 according to Embodiment 3.

The side airbag device according to the present embodiment combines the inventions according to Embodiments 1 and 2 described above, and includes: an airbag cushion 330 that restrains an occupant when expanded and deployed; and an inflator 32 that supplies expansion gas to the airbag cushion 330. The airbag cushion 330 includes: an inflator housing region 334 that houses the inflator 32; a main chamber region 335 that primarily contributes to restraining an occupant; and skeletal regions 336a, 336b that are connected to the inflator housing region 334 and deploy in a rod shape prior to the main chamber 335.

As illustrated in FIG. 5 and FIG. 10(A), the airbag cushion 330 can be molded into a bag shape by folding one panel over along the rear end side 100a and stitching together the other sides 100b, 100c, 100d. Note that the airbag cushion 330 can also be molded into a bag shape by overlaying two panels having the same shape and stitching them together around the entire circumference.

As illustrated in FIG. 10(A), the skeletal regions 336a, 336b include a first region 336a that extends from the upper portion of the inflator housing region 334 along the upper rear end side (100b) and a second region 336b that extends from the lower portion of the inflator housing region along the lower front end side (100d). The main chamber 335 is positioned between the first region 336a and the second region 336b.

As illustrated in FIG. 10(A) and FIG. 10(B), the inflator housing region 334 and skeletal regions 336a, 336b are molded by stitching an edge portion in a longitudinal direction of one strip-shaped partition panel 338 with regard an inner surface of the airbag cushion 330. The inflator housing region 334, which is substantially triangular in side view, is demarcated by the rear end side (100a), the lower portion of the lower front end side (100d), the lower portion of the upper rear end side (100b), and the partition panel 338.

As illustrated in FIG. 10(A), although partially curved, the partition panel 338 is configured so as to generally extend in a linear manner in the longitudinal direction at a portion corresponding to the skeletal regions 336a, 336b. When the skeletal regions 336a, 336b linearly extend in a rod shape, the expansion gas flows smoothly inside the skeletal regions 336a, 336b, resulting in a faster expansion rate.

As illustrated in FIG. 10(A) and FIG. 10(B), a vent hole 3446 [sic] is formed on a first end of the partition panel 338, a vent hole 348 is formed on a second end, and a vent hole 346 is formed in an intermediate portion. The vent hole 344 connects the skeletal region 336a and the main chamber 335. The vent hole 348 connects the skeletal region 336b and the main chamber 335. Furthermore, the vent hole 346 connects the inflator housing region 334 and the main chamber 335.

As illustrated in FIG. 10(A) and FIG. 10(C), a baffle plate 340 that regulates the thickness in the vehicle width direction is provided inside the main chamber 335. The baffle plate 340 is arranged and configured so as to extend essentially in parallel with the longitudinal direction of the skeletal regions 336a, 336b. Note that the partition panel 338 and baffle plate 340 can be molded from the same material fabric as the main body portion of the airbag cushion 330.

As illustrated in FIG. 10(C), setting of the cross-sectional shape and cross-sectional area of the skeletal regions 336a, 336b is the same as in the Embodiments 1 and 2 described above, and thus duplicate descriptions are omitted.

FIG. 11 is an explanatory diagram illustrating the flow of gas inside the airbag cushion 330. When the airbag device is activated and expansion gas is discharged from the inflator 32, expansion gas flows from the inflator housing region 334 to the skeletal regions 336a, 336b. The expansion gas also flows from the inflator housing region 334 through the vent hole 346 in the partition panel 338 to the main chamber 335.

Thereafter, gas flows from the skeletal regions 336a, 336b through the vent holes 344, 348 in the partition panel 338 into the main chamber 335, such that the airbag cushion 330 fully deploys.

In the present embodiment, the skeletal regions 336a, 336b precede the main chamber 335 and deploy into a rod shape. The internal pressure in the skeletal regions 336a, 336b, which have a small cross-sectional area, is relatively high, and the rigidity of the skeletal regions 336a, 336b increases, forming a core extending in a longitudinal direction on a front portion and rear portion of the airbag cushion 330. **In** the other words, the skeletal regions 336a, 336b extend from a lower portion to a wide range above and in front of the airbag cushion 330, allowing the airbag cushion 330 to be spread significantly at an early stage and the maximum restraining area to be quickly secured. Furthermore, when the occupant advances into the deployed airbag cushion 330, due to the presence of the highly rigid skeletal regions 336a, 336b, the airbag cushion 330 is not easily deformed, and thus the occupant can be reliably restrained.

FIG. 12 illustrates a configuration of a side airbag device according to an example, not according to the present invention, where (A) is a side view of a deployed airbag cushion 430, (B) is a plan view of a partition panel disposed inside the airbag cushion 430 to form a skeletal region, and (C) is a schematic cross-sectional view along direction A4-A4 in (A). FIG. 13 illustrates the flow of gas inside the airbag cushion in the side airbag device 430 according to Embodiment 4.

The side airbag device according to the present example includes:
an airbag cushion 430 that restrains an occupant when expanded and deployed; and an inflator 32 that supplies expansion gas to the airbag cushion 430. The airbag cushion 430 includes: an inflator housing region 434 that houses the inflator 32; main chamber regions 435a, 435b that primarily contributes to restraining an occupant; and skeletal region 436 that is connected to the inflator housing region 434 and deploys in a rod shape prior to the main chamber 435a, 435b.

As illustrated in FIG. 5 and FIG. 12(A), the airbag cushion 430 can be molded into a bag shape by folding one panel over along the rear end side 100a and stitching together the other sides 100b, 100c, 100d. Note that the airbag cushion 430 can also be molded into a bag shape by overlaying two panels having the same shape and stitching them together around the entire circumference.

As illustrated in FIG. 12(A), the skeletal region 436 is configured to extend from the inflator housing region 434 to an intermediate position of the upper front end side (100c), such that the main chambers 435a, 435b are positioned in front and behind the skeletal region 436.

As illustrated in FIG. 12(A) and FIG. 12(B), the inflator housing region 434 and the skeletal region 436 are demarcated by two strip-shaped partition panels 438a, 438b. Edge portions of the partition panels 438a, 438b in the longitudinal direction are stitched with regard to an inner surface of the airbag cushion 430. The inflator housing region 434, which is substantially triangular in side view, is demarcated by the rear end side (100a), the lower portion of the lower front end side (100d), the lower portion of the upper rear end side (100b), and the partition panels 438a, 438b.

As illustrated in FIG. 12(A), although partially curved, the partition panels 438a, 438b are configured so as to generally extend in a linear manner in the longitudinal direction at a portion corresponding to the skeletal region 436. When the skeletal region 436 linearly extend in a rod shape, the expansion gas flows smoothly inside the skeletal region 436, resulting in a faster expansion rate.

As illustrated in FIG. 12(A) and FIG. 12(B), vent holes 450a, 452a are formed at two end portions of the partition panel 438a. Similarly, vent holes 450b, 452b are formed at two end portions of the partition panel 438b. The vent holes 450a, 450b connect the skeletal region 436 and the main chambers 435a, 435b. The vent holes 452a, 452b connect the inflator housing region 434 and the main chambers 435a, 435b.

The partition panels 438a, 438b can be molded from the same material fabric as the main body portion of the airbag cushion 430.

As illustrated in FIG. 12(C), setting of the cross-sectional shape and cross-sectional area of the skeletal region 436 is the same as in the first example and embodiment 2 described above, and thus duplicate descriptions are omitted.

FIG. 13 is an explanatory diagram illustrating the flow of gas inside the airbag cushion 430. When the airbag device is activated and expansion gas is discharged from the inflator 32, expansion gas flows from the inflator housing region 434 to the skeletal region 436. The expansion gas also flows from the inflator housing region 434 through the vent holes 452a, 452b in the partition panels 438a, 438b to the main chambers 435a, 435b.

Thereafter, gas flows from the skeletal region 436 through the vent holes 450a, 450b in the partition panels 438a, 438b into the main chambers 435a, 435b, such that the airbag cushion 430 fully deploys.

In the present example, the skeletal region 436 precedes the main chamber 435 and deploys into a rod shape. The internal pressure in the skeletal region 436, which has a small cross-sectional area, is relatively high, and the rigidity of the skeletal region 436 increases, forming a core extending in the longitudinal direction at a center portion of the airbag cushion 430. When the occupant advances into the deployed airbag cushion 430, due to the presence of the highly rigid skeletal regions 436, the airbag cushion 430 is not easily deformed, and thus the occupant can be reliably restrained.

FIG. 14 illustrates a configuration of a side airbag device according to an example, not according to the present invention, where (A) is a side view of a deployed airbag cushion 530, (B) is a plan view of a partition panel disposed inside the airbag cushion 530 to form a skeletal region, and (C) is a schematic cross-sectional view along direction A5-A5 in (A). FIG. 15 illustrates the flow of gas inside the airbag cushion in the side airbag device 530 according to the present example.

The side airbag device according to the present embodiment is like a combination of the first and second examples, and includes: an airbag cushion 530 that restrains an occupant when expanded and deployed; and an inflator 32 that supplies expansion gas to the airbag cushion 530. The airbag cushion 530 includes: an inflator housing region 534 that houses the inflator 32; main chamber regions 535a, 535b that primarily contributes to restraining an occupant; and skeletal regions 536a, 536b that are connected to the inflator housing region 534 and deploy in a rod shape prior to the main chamber 535a, 535b.

As illustrated in FIG. 5 and FIG. 14(A), the airbag cushion 530 can be molded into a bag shape by folding one panel over along the rear end side 100a and stitching together the other sides 100b, 100c, 100d. Note that the airbag cushion 530 can also be molded into a bag shape by overlaying two panels having the same shape and stitching them together around the entire circumference.

As illustrated FIG. 14(A), the skeletal region 536a extends from an upper portion of the inflator housing region 534 along the upper rear end side (100b). On the other hand, the skeletal region 536b is configured to extend from the inflator housing region 534 to an intermediate position of the upper front end side (100c), such that the main chambers 535a, 535b are positioned in front and behind the skeletal region 536b.

As illustrated in FIG. 14(A) and FIG. 14(B), the inflator housing region 534 and the skeletal regions 536a, 536b are demarcated by two strip-shaped partition panels 538a, 538b. Edge portions of the partition panels 538a, 538b in the longitudinal direction are stitched with regard to an inner surface of the airbag cushion 530. The inflator housing region 534, which is substantially triangular in side view, is demarcated by the rear end side (100a), the lower portion of the lower front end side (100d), the lower portion of the upper rear end side (100b), and the partition panels 538a, 538b.

As illustrated in FIG. 14(A), although partially curved, the partition panels 538a, 538b are configured so as to generally extend in a linear manner in the longitudinal direction at a portion corresponding to the skeletal regions 536a, 536b. When the skeletal regions 536a, 536b linearly extend in a rod shape, the expansion gas flows smoothly inside the skeletal regions 536a, 536b, resulting in a faster expansion rate.

As illustrated in FIG. 14(A) and FIG. 14(B), vent holes 550a, 552a are formed at two end portions of the partition panel 538a. Similarly, vent holes 550b, 552b are formed at two end portions of the partition panel 538b. The vent holes 550a, 550b connect the skeletal region 536b and the main chambers 535a, 535b. The vent hole 552a connects the skeletal region 536a and the main chamber 535a. Furthermore, the vent hole 552b connects the inflator housing region 534 and the main chamber 535b.

The partition panels 538a, 538b can be molded from the same material fabric as the main body portion of the airbag cushion 530.

As illustrated in FIG. 14(C), setting of the cross-sectional shape and cross-sectional area of the skeletal regions 536a, 536b is the same as in the first example and embodiment 2 described above, and thus duplicate descriptions are omitted.

FIG. 15 is an explanatory diagram illustrating the flow of gas inside the airbag cushion 530. When the airbag device is activated and expansion gas is discharged from the inflator 32, expansion gas flows from the inflator housing region 534 to the skeletal regions 536a, 536b. The expansion gas also flows from the inflator housing region 534 through the vent hole 552b in the partition panel 538b to the main chamber 535b.

Thereafter, gas flows from the skeletal region 536a to the main chamber 535a through the vent hole 552a in the partition panel 538a. Furthermore, gas flows from the skeletal region 536b to the main chamber 535a through the vent hole 550a in the partition panel 538a. Furthermore, gas flows from the skeletal region 536b to the main chamber 535b through the vent hole 550b in the partition panel 538b. Thereby, the airbag cushion 530 is fully deployed.

In the present example, the skeletal regions 536a, 536b precede the main chambers 535a, 535b and deploy into a rod shape. The internal pressure in the skeletal regions 536a, 536b, which has a small cross-sectional area, is relatively high, and the rigidity of the skeletal regions 536a, 536b increases, forming a core extending in the longitudinal direction to a center portion of the airbag cushion 530 and a core extending in the longitudinal direction behind the airbag cushion. When the deployment shape of the airbag cushion 530 is stabilized and the occupant advances into the airbag cushion 530, due to the presence of the highly rigid skeletal regions 536a, 536b, the airbag cushion 530 is not easily deformed, and thus the occupant can be reliably restrained.

### Embodiment 6

FIG. 16 illustrates a configuration of a side airbag device according to Embodiment 6 of the present invention, where (A) is a side view of a deployed airbag cushion 630, (B) is a plan view of a partition panel disposed inside the airbag cushion 630 to form a skeletal region, and (C) is a schematic cross-sectional view along direction A6-A6 in (A). FIG. 17 illustrates the flow of gas inside the airbag cushion in the side airbag device 630 according to Embodiment 6.

The side airbag device according to the present embodiment is like a combination of the inventions according to Embodiments 2 and 4, and includes: an airbag cushion 630 that restrains an occupant when expanded and deployed; and an inflator 32 that supplies expansion gas to the airbag cushion 630. The airbag cushion 630 includes: an inflator housing region 634 that houses the inflator 32; main chamber regions 635a, 635b that primarily contributes to restraining an occupant; and skeletal regions 636a, 636b that are connected to the inflator housing region 634 and deploy in a rod shape prior to the main chamber 635a, 635b.

As illustrated in FIG. 5 and FIG. 16(A), the airbag cushion 630 can be molded into a bag shape by folding one panel over along the rear end side 100a and stitching together the other sides 100b, 100c, 100d. Note that the airbag cushion 630 can also be molded into a bag shape by overlaying two panels having the same shape and stitching them together around the entire circumference.

As illustrated in FIG. 16(A), the skeletal region 636a is configured to extend from the inflator housing region 634 to an intermediate position of the upper front end side (100c), such that the main chambers 635a, 635b are positioned on two sides (front and behind) of the skeletal region 636a. On the other hand, the skeletal region 636b extends from an upper portion of the inflator housing region 634 along the upper rear end side (100b).

As illustrated in FIG. 16(A) and FIG. 16(B), the inflator housing region 634 and the skeletal regions 636a, 636b are demarcated by two strip-shaped partition panels 638a, 638b. Edge portions of the partition panels 638a, 638b in the longitudinal direction are stitched with regard to an inner surface of the airbag cushion 630. The inflator housing region 634, which is substantially triangular in side view, is demarcated by the rear end side (100a), the lower portion of the lower front end side (100d), the lower portion of the upper rear end side (100b), and the partition panels 638a, 638b.

As illustrated in FIG. 16(A), although partially curved, the partition panels 638a, 638b are configured so as to generally extend in a linear manner in the longitudinal direction at a portion corresponding to the skeletal regions 636a, 636b. When the skeletal regions 636a, 636b linearly extend in a rod shape, the expansion gas flows smoothly inside the skeletal regions 636a, 636b, resulting in a faster expansion rate.

As illustrated in FIG. 16(A) and FIG. 16(B), vent holes 650a, 652a are formed at two end portions of the partition panel 638a. Vent holes 650b, 652c are formed at two end portions of the partition panel 638b, and a vent hole 652b is formed in a center vicinity. The partition panels 638a, 638b can be molded from the same material fabric as the main body portion of the airbag cushion 630.

The vent hole 650a in the partition panel 638a connects the skeletal region 636a and the main chamber 635a. The vent hole 652a in the partition panel 638a connects the inflator housing region 634 and the main chamber 635a. On the other hand, the vent hole 650b in the partition panel 638b connects the skeletal region 636a and the main chamber 635b. The vent hole 652b in the partition panel 638b connects the inflator housing region 634 and the main chamber 635b. The vent hole 652c in the partition panel 638b connects the skeletal region 636b and the main chamber 635b.

As illustrated in FIG. 16(C), setting of the cross-sectional shape and cross-sectional area of the skeletal regions 636a, 636b is the same as in the Embodiments 1 and 2 described above, and thus duplicate descriptions are omitted.

FIG. 17 is an explanatory diagram illustrating the flow of gas inside the airbag cushion 630. When the airbag device is activated and expansion gas is discharged from the inflator 32, expansion gas flows from the inflator housing region 634 to the skeletal regions 636a, 636b. The expansion gas also flows from the inflator housing region 634 through the vent hole 652a in the partition panel 638a to the main chamber 635b. Furthermore, flow also occurs to the main chamber 635b through the vent hole 652b in the partition panel 638b.

Thereafter, gas flows from the skeletal region 636a to the main chambers 635a, 635b through the vent hole 650a in the partition panel 638a and the vent hole 650b in the partition panel 638b, respectively. Furthermore, gas flows from the skeletal region 636b to the main chamber 635b through the vent hole 652c in the partition panel 638b. Thereby, the airbag cushion 630 is fully deployed.

In the present embodiment, the skeletal regions 636a, 636b precede the main chambers 635a, 635b and deploy into a rod shape. The internal pressure in the skeletal regions 636a, 636b, which has a small cross-sectional area, is relatively high, and the rigidity of the skeletal regions 636a, 636b increases, forming a core extending in the longitudinal direction to a center portion of the airbag cushion 630 and a core extending in the longitudinal direction in front of the airbag cushion. When the deployment shape of the airbag cushion 630 is stabilized and the occupant advances into the airbag cushion 630, due to the presence of the highly rigid skeletal regions 636a, 636b, the airbag cushion 630 is not easily deformed, and thus the occupant can be reliably restrained.

### Embodiment 7

FIG. 18 illustrates a configuration of a side airbag device according to Embodiment 7 of the present invention, where (A) is a side view of a deployed airbag cushion 730, (B) is a plan view of a partition panel disposed inside the airbag cushion 730 to form a skeletal region, and (C) is a schematic cross-sectional view along direction A7-A7 in (A). FIG. 19 illustrates the flow of gas inside the airbag cushion in the side airbag device 730 according to Embodiment 7.

The side airbag device according to the present embodiment is like a combined configuration of the inventions according to Embodiments 1, 2 and 4, and includes: an airbag cushion 730 that restrains an occupant when expanded and deployed; and an inflator 32 that supplies expansion gas to the airbag cushion 730. The airbag cushion 730 includes: an inflator housing region 734 that houses the inflator 32; main chamber regions 735a, 735b that primarily contributes to restraining an occupant; and skeletal regions 736a, 736b, 736c that are connected to the inflator housing region 734 and deploy in a rod shape prior to the main chamber 735a, 735b.

As illustrated in FIG. 5 and FIG. 18(A), the airbag cushion 730 can be molded into a bag shape by folding one panel over along the rear end side 100a and stitching together the other sides 100b, 100c, 100d. Note that the airbag cushion 730 can also be molded into a bag shape by overlaying two panels having the same shape and stitching them together around the entire circumference.

As illustrated in FIG. 18(A), the skeletal region 736a extends from an upper portion of the inflator housing region 734 along the upper rear end side (100b). The skeletal region 736b extends from a lower portion of the inflator housing region 734 along the lower front end side (100d). Furthermore, the skeletal region 736c is configured to extend from the inflator housing region 734 to an intermediate position of the upper front end side (100c), such that the main chambers 735a, 735b are positioned on two sides (front and behind) of the skeletal region 736a.

As illustrated in FIG. 18(A) and FIG. 18(B), the inflator housing region 734 and the skeletal regions 736a, 736b, 736c are demarcated by two strip-shaped partition panels 738a, 738b. Edge portions of the partition panels 738a, 738b in the longitudinal direction are stitched with regard to an inner surface of the airbag cushion 730. The inflator housing region 734, which is substantially triangular in side view, is demarcated by the rear end side (100a), the lower portion of the lower front end side (100d), the lower portion of the upper rear end side (100b), and the partition panels 738a, 738b.

As illustrated in FIG. 18(A), although partially curved, the partition panels 738a, 738b are configured so as to generally extend in a linear manner in the longitudinal direction at a portion corresponding to the skeletal regions 736a, 736b, 736c. When the skeletal regions 736a, 736b, 736c linearly extend in a rod shape, the expansion gas flows smoothly inside the skeletal regions 736a, 736b, 736c resulting in a faster expansion rate.

As illustrated in FIG. 18(A) and FIG. 18(B), vent holes 750a, 750b are formed at two end portions of the partition panel 738a, and 750c is formed in a center portion. Similarly, vent holes 752a, 752b are formed at two end portions of the partition panel 738b, and 752c is formed in a center portion. The partition panels 738a, 738b can be molded from the same material fabric as the main body portion of the airbag cushion 730.

The vent hole 750a in the partition panel 738a connects the skeletal region 736a and the main chamber 735a. The vent hole 750b in the partition panel 738a connects the skeletal region 736b and the main chamber 735a. The vent hole 750c in the partition panel 738a connects the inflator housing region 734 and the main chamber 735a. On the other hand, the vent hole 752a in the partition panel 738b connects the skeletal region 736c and the main chamber 735b. The vent hole 752b in the partition panel 738b connects the skeletal region 736b and the main chamber 735b. The vent hole 752c in the partition panel 738b connects the inflator housing region 734 and the main chamber 735b.

As illustrated in FIG. 18(C), setting of the cross-sectional shape and cross-sectional area of the skeletal regions 736a, 736b, 736c is the same as in the Embodiments 1 and 2 described above, and thus duplicate descriptions are omitted.

FIG. 19 is an explanatory diagram illustrating the flow of gas inside the airbag cushion 730. When the airbag device is activated and expansion gas is discharged from the inflator 32, expansion gas flows from the inflator housing region 734 to the skeletal regions 736a, 736b, 736c. On the other hand, the expansion gas also flows from the inflator housing region 734 through the vent hole 750c in the partition panel 738a to the main chamber 735b. Furthermore, flow also occurs to the main chamber 735b through the vent hole 752c in the partition panel 738b.

Thereafter, gas flows from the skeletal region 736a to the main chamber 735a through the vent hole 750a in the partition panel 738a. Gas flows from the skeletal region 736c to the main chambers 735a, 735b through the vent hole 750b in the partition panel 738a and the vent hole 752a in the partition panel 738b, respectively. Furthermore, gas flows from the skeletal region 736b to the main chamber 735b through the vent hole 752b in the partition panel 738b. Thereby, the airbag cushion 730 is fully deployed.

In the present embodiment, the skeletal regions 736a, 736b, 736c precede the main chambers 735a, 735b and deploy into a rod shape. The internal pressure in the skeletal regions 736a, 736b, 736c which has a small cross-sectional area, is relatively high, and the rigidity of the skeletal regions 736a, 736b, 736c increases, forming a core extending in the longitudinal direction on a center portion, in front of, and behind the airbag cushion 730. When the deployment shape of the airbag cushion 730 is stabilized and the occupant advances into the airbag cushion 730, due to the presence of the highly rigid skeletal regions 736a, 736b, 736c the airbag cushion 730 is not easily deformed, and thus the occupant can be reliably restrained.

## Claims

1. An airbag cushion (30, 130, 230, 330, 430, 530, 630, 730) that includes:
an inflator housing region (134, 234, 334, 434, 534, 634, 734) that houses an inflator (32); a main chamber region (135, 235, 335, 435a, 435b, 535a, 535b, 635a, 635b, 735a, 735b) that primarily contributes to restraining an occupant; and a skeletal region (136, 236, 336a, 336b, 436, 536a, 536b, 636a, 636b, 736a, 736b, 736c) that is connected to the inflator housing region (134, 234, 334, 434, 534, 634, 734) and deploys in a rod shape prior to the main chamber, and
a first vent hole (144, 248, 344, 348, 450a, 450b, 550a, 550b, 552a, 650a, 650b, 652c, 750a, 750b, 752a, 752b) that discharges the expansion gas into the main chamber is formed in the skeletal region (136, 236, 336a, 336b, 436, 536a, 536b, 636a, 636b, 736a, 736b, 736c), wherein
the airbag cushion (30, 130, 230, 330, 430, 530, 630, 730) includes a rear end side (100a) extending in an up-down direction on a lower portion at the rear of the vehicle, an upper rear end side (100b) extending diagonally upward and forward from an upper end of the rear end side, a lower front end side (100d) extending diagonally upward and forward from the lower portion of the rear end side (100a), and an upper front end side (100c) extending between the upper rear end side (100b) and the lower front end side (100d), and
the inflator housing region (134, 234, 334, 434, 534, 634, 734) is demarcated by the rear end side (100a), the lower portion of the lower front end side (100d), and the lower portion of the upper rear end side (100b), **characterized in that** the skeletal region (136, 236, 336a, 336b, 436, 536a, 536b, 636a, 636b, 736a, 736b, 736c) includes a second region extending from a lower portion of the inflator housing region (134, 234, 334, 434, 534, 634, 734) along the lower front end side (100d), and
the main chamber is positioned behind the second region.

2. A side airbag device (20) housed in a vehicle seat, comprising:
an airbag cushion (30, 130, 230, 330, 430, 530, 630, 730) according to claim 1 that restrains an occupant by expanding and deploying; and
an inflator (32) that supplies expansion gas to the airbag cushion (30, 130, 230, 330, 430, 530, 630, 730).

3. The side airbag device (20) according to claim 2, wherein a length (D1) in a front-rear direction and a length (D2) in a left-right width direction are essentially the same when the skeletal region (136, 236, 336a, 336b, 436, 536a, 536b, 636a, 636b, 736a, 736b, 736c) in the deployed state is viewed in a cross section perpendicular to a longitudinal direction of the region.

4. The side airbag device (20) according to claim 2 or 3, wherein the skeletal region (136, 236, 336a, 336b, 436, 536a, 536b, 636a, 636b, 736a, 736b, 736c) generally extends in a linear manner with regard to the longitudinal direction.

5. The side airbag device (20) according to claim 2, 3 or 4 wherein the inflator housing region (134, 234, 334, 434, 534, 634, 734) is configured to fit inside a side support part of the vehicle seat, when the deployed airbag cushion (30, 130, 230, 330, 430, 530, 630, 730) is viewed from a side of a vehicle.

6. The side airbag device (20) according to any one of the claims 2 to 5, wherein the skeletal region (136, 236, 336a, 336b, 436, 536a, 536b, 636a, 636b, 736a, 736b, 736c) includes a first region extending from an upper portion of the inflator housing region (134, 234, 334, 434, 534, 634, 734) along the upper rear end side (100b), and
the main chamber is positioned in front of the skeletal region (136, 236, 336a, 336b, 436, 536a, 536b, 636a, 636b, 736a, 736b, 736c).

7. The side airbag device (20) according to any one of the claims 2 to 6, wherein the skeletal region (136, 236, 336a, 336b, 436, 536a, 536b, 636a, 636b, 736a, 736b, 736c) includes a first region extending from an upper portion of the inflator housing region (134, 234, 334, 434, 534, 634, 734) along the upper rear end side (100b) and a second region extending from a lower portion of the inflator housing region (134, 234, 334, 434, 534, 634, 734) along the lower front end side (100d), and
the main chamber is positioned between the first region and second region.

8. The side airbag device (20) according to any one of the claims 2 to 7, wherein the skeletal region (136, 236, 336a, 336b, 436, 536a, 536b, 636a, 636b, 736a, 736b, 736c) includes a third region extending from the inflator housing region (134, 234, 334, 434, 534, 634, 734) to a center position of the upper front end side (100c), and
the main chamber is positioned in front of and behind the skeletal region (136, 236, 336a, 336b, 436, 536a, 536b, 636a, 636b, 736a, 736b, 736c).

9. The side airbag device (20) according to any one of the claims 2 to 8, wherein a baffle plate (140, 142, 240, 340) that regulates the thickness in a vehicle width direction is provided inside the main chamber.

10. The side airbag device (20) according to claim 9, wherein the baffle plate (140, 142, 240, 340) extends substantially parallel to the skeletal region (136, 236, 336a, 336b, 436, 536a, 536b, 636a, 636b, 736a, 736b, 736c), when the deployed airbag cushion (30, 130, 230, 330, 430, 530, 630, 730) is viewed from the vehicle width direction.

11. The side airbag device (20) according to any one of the claims 2 to 10, wherein a second vent hole (146) that discharges the expansion gas into the main chamber is formed in the inflator housing region (134, 234, 334, 434, 534, 634, 734) .

## Patentansprüche

1. Airbagkissen (30, 130, 230, 330, 430, 530, 630, 730), das einschließt:
einen Gasgeneratorgehäusebereich (134, 234, 334, 434, 534, 634, 734), der einen Gasgenerator (32) aufnimmt; einen Hauptkammerbereich (135, 235, 335, 435a, 435b, 535a, 535b, 635a, 635b, 735a, 735b), der primär beiträgt, einen Insassen, zurückzuhalten; und einen Skelettbereich (136, 236, 336a, 336b, 436, 536a, 536b, 636a, 636b, 736a, 736b, 736c), der mit dem Gasgeneratorgehäusebereich (134, 234, 334, 434, 534, 634, 734) verbunden ist und sich vor der Hauptkammer in einer Stabform entfaltet, und
eine erste Entlüftungsöffnung (144, 248, 344, 348, 450a, 450b, 550a, 550b, 552a, 650a, 650b, 652c, 750a, 750b, 752a, 752b), die das Expansionsgas in die Hauptkammer abgibt, in dem Skelettbereich (136, 236, 336a, 336b, 436, 536a, 536b, 636a, 636b, 736a, 736b, 736c) ausgebildet ist, wobei
das Airbagkissen (30, 130, 230, 330, 430, 530, 630, 730) eine Rückendseite (100a), die sich in eine Oben-Unten-Richtung auf einem unteren Abschnitt an der Rückseite des Fahrzeugs erstreckt, eine obere Rückendseite (100b), die sich von einem oberen Ende der Rückendseite diagonal nach oben und nach vorne erstreckt, eine untere Vorderendseite (100d), die sich von dem unteren Abschnitt der Rückendseite (100a) diagonal nach oben und nach vorne erstreckt, und eine obere Vorderendseite (100c), die sich zwischen der oberen Rückendseite (100b) und der unteren Vorderendseite (100d) erstreckt, einschließt, und
der Gasgeneratorgehäusebereich (134, 234, 334, 434, 534, 634, 734) durch die Rückendseite (100a), den unteren Abschnitt der unteren Vorderendseite (100d) und den unteren Abschnitt der oberen Rückendseite (100b) abgegrenzt ist, **dadurch gekennzeichnet, dass** der Skelettbereich (136, 236, 336a, 336b, 436, 536a, 536b, 636a, 636b, 736a, 736b, 736c) einen zweiten Bereich, der sich von einem unteren Abschnitt des Gasgeneratorgehäusebereichs (134, 234, 334, 434, 534, 634, 734) entlang der unteren Vorderendseite (100d) erstreckt, einschließt, und
die Hauptkammer hinter dem zweiten Bereich positioniert ist.

2. Seitenairbagvorrichtung (20), die in einem Fahrzeugsitz aufgenommen ist, umfassend:
ein Airbagkissen (30, 130, 230, 330, 430, 530, 630, 730) nach Anspruch 1, das einen Insassen durch Expandieren und Entfalten zurückhält; und
einen Gasgenerator (32), der Expansionsgas an das Airbagkissen (30, 130, 230, 330, 430, 530, 630, 730) zuführt.

3. Seitenairbagvorrichtung (20) nach Anspruch 2, wobei eine Länge (D1) in einer Vorder-Rück-Richtung und eine Länge (D2) in einer Links-Rechts-Breitenrichtung im Wesentlichen gleich sind, wenn der Skelettbereich (136, 236, 336a, 336b, 436, 536a, 536b, 636a, 636b, 736a, 736b, 736c) in dem entfalteten Zustand in einem Querschnitt senkrecht zu einer Längsrichtung des Bereichs betrachtet wird.

4. Seitenairbagvorrichtung (20) nach Anspruch 2 oder 3, wobei sich der Skelettbereich (136, 236, 336a, 336b, 436, 536a, 536b, 636a, 636b, 736a, 736b, 736c) allgemein in einer linearen Weise bezüglich der Längsrichtung erstreckt.

5. Seitenairbagvorrichtung (20) nach Anspruch 2, 3 oder 4, wobei der Gasgeneratorgehäusebereich (134, 234, 334, 434, 534, 634, 734) konfiguriert ist, um in ein seitliches Stützteil des Fahrzeugsitzes zu passen, wenn das entfaltete Airbagkissen (30, 130, 230, 330, 430, 530, 630, 730) von einer Seite eines Fahrzeugs betrachtet wird.

6. Seitenairbagvorrichtung (20) nach einem der Ansprüche 2 bis 5, wobei der Skelettbereich (136, 236, 336a, 336b, 436, 536a, 536b, 636a, 636b, 736a, 736b, 736c) einen ersten Bereich, der sich von einem oberen Abschnitt des Gasgeneratorgehäusebereichs (134, 234, 334, 434, 534, 634, 734) entlang der oberen Rückendseite (100b) erstreckt, einschließt, und
die Hauptkammer vor dem Skelettbereich (136, 236, 336a, 336b, 436, 536a, 536b, 636a, 636b, 736a, 736b, 736c) positioniert ist.

7. Seitenairbagvorrichtung (20) nach einem der Ansprüche 2 bis 6, wobei der Skelettbereich (136, 236, 336a, 336b, 436, 536a, 536b, 636a, 636b, 736a, 736b, 736c) einen ersten Bereich, der sich von einem oberen Abschnitt des Gasgeneratorgehäusebereichs (134, 234, 334, 434, 534, 634, 734) entlang der oberen Rückendseite (100b) erstreckt, und einen zweiten Bereich, der sich von einem unteren Abschnitt des Gasgeneratorgehäusebereichs (134, 234, 334, 434, 534, 634, 734) entlang der unteren Vorderendseite (100d) erstreckt, einschließt, und
die Hauptkammer zwischen dem ersten Bereich und dem zweiten Bereich positioniert ist.

8. Seitenairbagvorrichtung (20) nach einem der Ansprüche 2 bis 7, wobei der Skelettbereich (136, 236, 336a, 336b, 436, 536a, 536b, 636a, 636b, 736a, 736b, 736c) einen dritten Bereich, der sich von dem Gasgeneratorgehäusebereich (134, 234, 334, 434, 534, 634, 734) zu einer Mittelposition der oberen Vorderendseite (100c) erstreckt, einschließt, und
die Hauptkammer vor und hinter dem Skelettbereich (136, 236, 336a, 336b, 436, 536a, 536b, 636a, 636b, 736a, 736b, 736c) positioniert ist.

9. Seitenairbagvorrichtung (20) nach einem der Ansprüche 2 bis 8, wobei eine Prallplatte (140, 142, 240, 340), die die Dicke in einer Fahrzeugbreitenrichtung reguliert, in der Hauptkammer bereitgestellt ist.

10. Seitenairbagvorrichtung (20) nach Anspruch 9, wobei sich die Prallplatte (140, 142, 240, 340) im Wesentlichen parallel zu dem Skelettbereich (136, 236, 336a, 336b, 436, 536a, 536b, 636a, 636b, 736a, 736b, 736c) erstreckt, wenn das entfaltete Airbagkissen (30, 130, 230, 330, 430, 530, 630, 730) von der Fahrzeugbreitenrichtung betrachtet wird.

11. Seitenairbagvorrichtung (20) nach einem der Ansprüche 2 bis 10, wobei ein zweites Entlüftungsloch (146), das das Expansionsgas in die Hauptkammer abgibt, in dem Gasgeneratorgehäusebereich (134, 234, 334, 434, 534, 634, 734) ausgebildet ist.

## Revendications

1. Sac de coussin de sécurité gonflable (30, 130, 230, 330, 430, 530, 630, 730) qui comporte : une région de logement de gonfleur (134, 234, 334, 434, 534, 634, 734) qui loge un gonfleur (32) ; une région de chambre principale (135, 235, 335, 435a, 435b, 535a, 535b, 635a, 635b, 735a, 735b) qui contribue principalement à retenir un occupant ; et une région squelettique (136, 236, 336a, 336b, 436, 536a, 536b, 636a, 636b, 736a, 736b, 736c) qui est reliée à la région de logement de gonfleur (134, 234, 334, 434, 534, 634, 734) et se déploie en une forme de tige avant la chambre principale, et
un premier trou d'évent (144, 248, 344, 348, 450a, 450b, 550a, 550b, 552a, 650a, 650b, 652c, 750a, 750b, 752a, 752b) qui décharge le gaz d'expansion dans la chambre principale est formé dans la région squelettique (136, 236, 336a, 336b, 436, 536a, 536b, 636a, 636b, 736a, 736b, 736c), dans lequel
le sac de coussin de sécurité gonflable (30, 130, 230, 330, 430, 530, 630, 730) comporte un côté d'extrémité arrière (100a) s'étendant dans une direction haut-bas sur une portion inférieure à l'arrière du véhicule, un côté d'extrémité arrière supérieur (100b) s'étendant en diagonale vers le haut et vers l'avant à partir de l'extrémité supérieure du côté d'extrémité arrière, un côté d'extrémité avant inférieur (100d) s'étendant en diagonale vers le haut et vers l'avant à partir de la portion inférieure du côté d'extrémité arrière (100a), et un côté d'extrémité avant supérieur (100c) s'étendant entre le côté d'extrémité arrière supérieur (100b) et le côté d'extrémité avant inférieur (100d), et
la région de logement de gonfleur (134, 234, 334, 434, 534, 634, 734) est délimitée par le côté d'extrémité arrière (100a), la portion inférieure du côté d'extrémité avant inférieur (100d) et la portion inférieure du côté d'extrémité arrière supérieur (100b), **caractérisé en ce que** la région squelettique (136, 236, 336a, 336b, 436, 536a, 536b, 636a, 636b, 736a, 736b, 736c) comporte une deuxième région s'étendant à partir d'une portion inférieure de la région de logement de gonfleur (134, 234, 334, 434, 534, 634, 734) le long du côté d'extrémité avant inférieur (100d), et
la chambre principale est positionnée derrière la deuxième région.

2. Dispositif de coussin de sécurité gonflable latéral (20) logé dans un siège de véhicule, comprenant :
un sac de coussin de sécurité gonflable (30, 130, 230, 330, 430, 530, 630, 730) selon la revendication 1 qui retient un occupant par expansion et déploiement ; et
un gonfleur (32) qui alimente un gaz d'expansion au sac de coussin de sécurité gonflable (30, 130, 230, 330, 430, 530, 630, 730).

3. Dispositif de coussin de sécurité gonflable latéral (20) selon la revendication 2, dans lequel une longueur (D1) dans une direction avant-arrière et une longueur (D2) dans une direction en largeur gauche-droite sont essentiellement les mêmes lorsque la région squelettique (136, 236, 336a, 336b, 436, 536a, 536b, 636a, 636b, 736a, 736b, 736c) dans l'état déployé est observée dans une coupe transversale perpendiculaire à une direction longitudinale de la région.

4. Dispositif de coussin de sécurité gonflable latéral (20) selon la revendication 2 ou 3, dans lequel la région squelettique (136, 236, 336a, 336b, 436, 536a, 536b, 636a, 636b, 736a, 736b, 736c) s'étend généralement d'une manière linéaire par rapport à la direction longitudinale.

5. Dispositif de coussin de sécurité gonflable latéral (20) selon la revendication 2, 3 ou 4 dans lequel la région de logement de gonfleur (134, 234, 334, 434, 534, 634, 734) est conçue pour s'ajuster à l'intérieur d'une partie de support latéral du siège de véhicule, lorsque le sac de coussin de sécurité gonflable (30, 130, 230, 330, 430, 530, 630, 730) déployé est observé depuis un côté d'un véhicule.

6. Dispositif de coussin de sécurité gonflable latéral (20) selon l'une quelconque des revendications 2 à 5, dans lequel la région squelettique (136, 236, 336a, 336b, 436, 536a, 536b, 636a, 636b, 736a, 736b, 736c) comporte une première région s'étendant à partir d'une portion supérieure de la région de logement de gonfleur (134, 234, 334, 434, 534, 634, 734) le long du côté d'extrémité arrière supérieur (100b), et
la chambre principale est positionnée devant la région squelettique (136, 236, 336a, 336b, 436, 536a, 536b, 636a, 636b, 736a, 736b, 736c).

7. Dispositif de coussin de sécurité gonflable latéral (20) selon l'une quelconque des revendications 2 à 6, dans lequel la région squelettique (136, 236, 336a, 336b, 436, 536a, 536b, 636a, 636b, 736a, 736b, 736c) comporte une première région s'étendant à partir d'une portion supérieure de la région de logement de gonfleur (134, 234, 334, 434, 534, 634, 734) le long du côté d'extrémité arrière supérieur (100b) et une deuxième région s'étendant à partir d'une portion inférieure de la région de logement de gonfleur (134, 234, 334, 434, 534, 634, 734) le long du côté d'extrémité avant inférieur (100d), et
la chambre principale est positionnée entre la première région et la deuxième région.

8. Dispositif de coussin de sécurité gonflable latéral (20) selon l'une quelconque des revendications 2 à 7, dans lequel la région squelettique (136, 236, 336a, 336b, 436, 536a, 536b, 636a, 636b, 736a, 736b, 736c) comporte une troisième région s'étendant de la région de logement de gonfleur (134, 234, 334, 434, 534, 634, 734) à une position centrale du côté d'extrémité avant supérieur (100c), et
la chambre principale est positionnée devant et derrière la région squelettique (136, 236, 336a, 336b, 436, 536a, 536b, 636a, 636b, 736a, 736b, 736c).

9. Dispositif de coussin de sécurité gonflable latéral (20) selon l'une quelconque des revendications 2 à 8, dans lequel une plaque déflectrice (140, 142, 240, 340) qui régule l'épaisseur dans une direction de largeur de véhicule est fournie à l'intérieur de la chambre principale.

10. Dispositif de coussin de sécurité gonflable latéral (20) selon la revendication 9, dans lequel la plaque déflectrice (140, 142, 240, 340) s'étend sensiblement parallèle à la région squelettique (136, 236, 336a, 336b, 436, 536a, 536b, 636a, 636b, 736a, 736b, 736c), lorsque le sac de coussin de sécurité gonflable (30, 130, 230, 330, 430, 530, 630, 730) déployé est observé depuis la direction de largeur de véhicule.

11. Dispositif de coussin de sécurité gonflable latéral (20) selon l'une quelconque des revendications 2 à 10, dans lequel un second trou d'évent (146) qui décharge le gaz d'expansion dans la chambre principale est formé dans la région de logement de gonfleur (134, 234, 334, 434, 534, 634, 734).
